# EUROPEAN PATENT SPECIFICATION

(11) **EP 2 047 656 B1**
(45) Date of publication and mention of the grant of the patent: **05.01.2011**
(21) Application number: 07791785.4
(22) Date of filing: 26.07.2007
(51) Int. Cl.: H04L 29/06, H04L 29/12

(54) **ADDRESS UPDATING METHOD, CORRESPONDING MOBILE TERMINAL AND NODE**
ADRESSENAKTUALISIERUNGSVERFAHREN, ENTSPRECHENDES MOBILES ENDGERÄT UND KNOTEN
PROCÉDÉ DE MISE À JOUR D'ADRESSE, TEMINAL MOBILE ET NOEUD CORRESPONDANTS

(30) Priority: 28.07.2006 JP 2006207189
(43) Date of publication of application: 15.04.2009
(73) Proprietor: Panasonic Corporation, Kadoma-shi Osaka 571-8501 (JP)
(72) Inventor: HIRANO, Jun c/o Panasonic Corp., IPROC, Chuo-ku, Osaka-shi, Osaka 540-6207 (JP); NG, Chan Wah c/o Panasonic Lab., Pte., Ltd., Tai Seng Ind. Estate, Singapore 534415 (SG); LIM, Chun Keong Benjamin c/o Panasonic Singapore Lab. Pte., Ltd., Tai Seng Industrial Estate, Singapore 534415 (SG); KOH, Tien Ming Benjamin c/o Panasonic Singapore Lab., Pte., Ltd., Tai Seng Industrial Estate, Singapore 534415 (SG); TAN, Pek Yew c/o Panasonic Singapore Lab., Pte., Ltd., Tai Seng Industrial Estate, Singapore 534415 (SG)
(74) Representative: Grünecker, Kinkeldey, Stockmair & Schwanhäusser Anwaltssozietät
(86) International application number: PCT/JP2007/065105
(87) International publication number: WO 2008/013312

(56) References cited:
- EP-A- 1 667 385
- US-A1- 2004 047 348
- HONGBO SHI ET AL: "Utilizing multiple home links in mobile IPv6" WIRELESS COMMUNICATIONS AND NETWORKING CONFERENCE, 2004. WCNC. 2004 IEEE ATLANTA, GA, USA 21-25 MARCH 2004, PISCATAWAY, NJ, USA,IEEE, vol. 1, 21 March 2004 (2004-03-21), pages 149-154, XP010708366 ISBN: 0-7803-8344-3
- MONTAVONT GET/ENST-B R WAKIKAWA KEIO UNIVERSITY T ERNST INRIA C NG PANASONIC SINGAPORE LABS K KULADINITHI UNIVERSITY OF BREMEN N: "Analysis of Multihoming in Mobile IPv6" IETF STANDARD-WORKING-DRAFT, INTERNET ENGINEERING TASK FORCE, IETF, CH, vol. monami6, no. 1, 26 June 2006 (2006-06-26), XP015045223 ISSN: 0000-0004
- T-W YOU ETRI I-D JANG ETRI S-Y LEE ETRI: "Managements for using multiple home addresses as care-of addresses" IETF STANDARD-WORKING-DRAFT, INTERNET ENGINEERING TASK FORCE, IETF, CH, October 2005 (2005-10), XP015043160 ISSN: 0000-0004

## Description

### TECHNICAL FIELD

The present invention relates to amobile node destination address updating method for use in a communication system which is made to manage a home address allocated to a mobile node and a destination address of the mobile node associated with each other, and a mobile node, a proxy node and a management node for use in this method.

### BACKGROUND ART

At present, many mobile devices communicate with each other through the use of IP (Internet Protocol). For providing mobility support tomobile devices, IETF (Internet Engineering Task Force) has developed the "Mobility Support in IPv6" (see the following Non-Patent Document 1). Under mobile IP, each mobile node has a permanent home domain. When the mobile node is attached to a home network, a primary global address known was a home address (HoA) is allocated thereto. If the mobile node goes away, for example, when it attaches to another external network, a temporary global address known as a CoA (Care-of address) is usually allocated thereto. The concept of the mobility support is such that, even if the mobile node attaches to an external network, the mobile node can be reached at the home address.

This is realizable with an entity known as a home agent (HA) in a home network (see the following Non-Patent Document 1). The mobile node registers a CoA in the home-agent through the use of a message known as BU (Binding Update). This allows the home agent to produce the association (binding) between the home address and the CoA of the mobile node. The home agent intercepts a message directed at the home address of the mobile node and transfers a packet to the CoA of the mobile node through the use of the packet encapsulation (for example, putting a single packet as a payload of a new packet, such as packet tunneling). Moreover, when a BU message is sent to a communication partner of the mobile node, known as a CN (Correspondent Node), the CN can forward packets to the CoA of the mobile node in place of the home address of the mobile node.

However, there is a possibility that the Mobile IPv6 is insufficient in a case in which a mobile node is capable of having a plurality of access interfaces. The preparation of a plurality of access interfaces is now popular. For example, recently, all notebook computers have 802.11/ab/g and Bluetooth interfaces. Phones having 3G, Bluetooth and wireless LAN functions have already been put on the market.

Some conventional techniques attempt to utilize a plurality of access interfaces through the mobile IP. The following Patent Documents 1 and 2 disclose methods for the handover of flows using different home addresses. Although these methods allow a mobile node to use a plurality of access interfaces for easy handover, the Patent Documents 1 and 2 do not disclose how the mobile node simultaneously uses both the interfaces. On the other hand, the following Patent Document 3 proposes a function whereby a mobile node sends information on connection to a home agent, wherein a packet is transferred to the home agent on the basis of this connection information. However, this is limited to only the CoA of the mobile node. The following Patent Document 4 discloses the same type in which a mobile node selectively registers different CoAs between its own home agent and a CN. The following Non-Patent Document 2 discloses a method in which a mobile node registers a plurality of CoAs at the same home address between its own home agent and a CN.

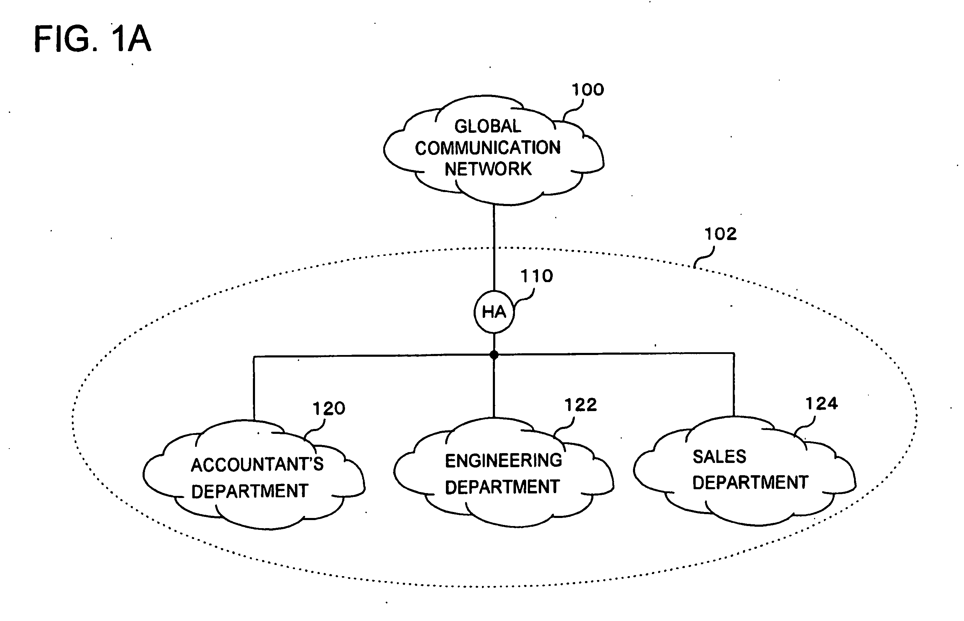

These conventional techniques enable the registration of a plurality of CoAs in a mobile node. However, this cannot be used when a mobile node has a plurality of home addresses, which can happen when, in most common cases, a home link is multihomed (for example, a plurality of prefixes is configured on a home link. In this case, a plurality of home addresses is allocated to the mobile node). A possible arrangement is a corporate network as shown in FIG. 1A. In this arrangement, a global communication network 100 is capable of becoming the internet, and a corporate network 102 contains a single home agent (HA) 110 for the entire corporation.

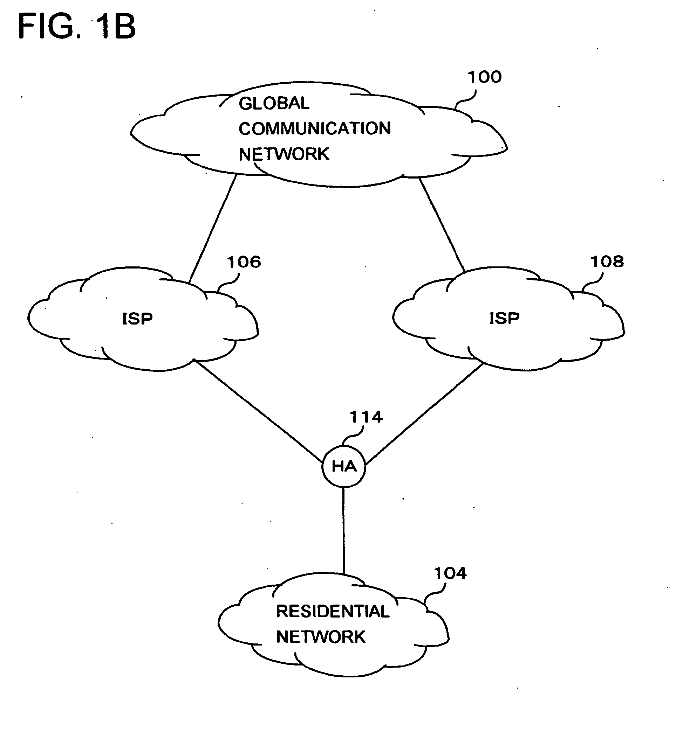

The corporation is divided into different departments, and each of the departments has subnets 120, 122 and 124 each having a unique prefix. Accordingly, a plurality of home addresses are allocated to a mobile node pertaining to a GM (General Manager) which requires the access to a plurality of file servers from the different departments. FIG. 1B is an illustration of another possible arrangement in which a mobile node is provided with a plurality of home addresses. This is a case in which a user (MN) has a home agent 114 in a residential network 104. The user can gain access to the global communication network 100 through two different ISPs (Internet Service Providers) 106 and 108. Each of the ISPs allocates a different prefix to a residential network. Thus, two different home addresses are allocated to a mobile node of the user, and one of each of prefixes is allocated by each of ISPs.
[Patent Document 1] European Patent Application EP1432198A1, Gallego Catalina, M., and Janneteau, C., "Data flow handover in communication using mobile internet protocol", European Patent Application EP1432198A1, 23 Jun 2004
[Patent Document 2] US Patent Application 20060018273A1, Yamada, M. et al., "Mobile node, server, and communication system", US Patent Application US2006001827 3A1, 26 Jan 2006
[Patent Document 3] PCT International Application WO 00/42755, Richard, J., and Caroline, A. M., "Mobile Communications Network", PCT Application WO 00/42755, 20 Jul, 2000
[Patent Document 4] US Patent-Application US 20040142657A1, Maeda, M., "Location registration using multiple care-of-address", US Patent Application US20040192657A1, 22 Jul, 2004
[Patent Document 5] PCT International Application WO05020539A1, Haddad, W., and Krishnan, S., "A Method and Apparatus for Aggregated Binding Updates and Acknowledgement in Mobile IPv6", PCT Application 2005/020539A1, 3 Mar 2005
[Patent Document 6] PCT International Application WO03096592A2, O'Neill, A., "Methods and Apparatus for Aggregating MIP and AAA Messages", PCT Application 2003/096592A2, 20 Nov 2003
[Non-Patent Document 1] Johnson, D. B., Perkins, C. E., andArkko, J., "Mobility Support in IPv6", Internet Engineering Task Force Request For Comments 3775, June 2004
[Non-Patent Document 2] Wakikawa, R., et. al. "Multiple Care-of Addresses Registration", Internet Draft: draft-wakikawa-mobileip-multiplecoa-05.txt, Feb 2006

In a case in which a mobile node has a plurality of home addresses and a plurality of CoAs, the mobile node must transmit a plurality of BU messages by using the above-mentioned method based on the conventional technique, i.e., one for each home address. For saving the power consumption, the mobile node is generally subjected to the restriction of processing capability. This signifies that the transmission of a plurality of BU messages is undesirable. Add to it that, in a network such as cellular, because of bandwidth restriction and high cost, the transmission of a plurality of BU messages leads to an increase in cost and use of much bandwidth.

Meanwhile, the above-mentioned Patent Document 5 discloses a method of aggregating a plurality of BU messages. However, in this method, consideration is given to only the aggregation of the BU messages including the same home addresses with respect to different recipients. Thus, it is not useful in saving of bandwidth in a case in which a mobile node has a plurality of home addresses. Moreover, the above-mentioned Patent Document 6 discloses a method of specifying a plurality of home addresses in a single message. However, this considers only that a plurality of home addresses are bound in the same CoA, but not considering a mobile node having a plurality of home addresses and a plurality of CoAs. Although a person skilled in the art recognizes that a combination of the above-mentioned conventional techniques is able to configure an aggregated BU message for a plurality of home addresses and a plurality of CoAs, difficulty is encountered in achieving it. This is because, for example, the mobile node cannot specify arbitrary bindings between a plurality of home addresses and a plurality of CoAs.

In addition, the conventional techniques do not take into consideration a case in which a plurality of home addresses pertains to different mobile nodes. That is, each of the mobile nodes is required to send a BU message. In a personal area network, a user possesses a plurality of mobile devices and acquires a mobile IPv6 service through each device. In such a scenario, although the presence of a node carrying out the BU registration for all the mobile nodes is useful, the combinations of the conventional techniques are incapable of achieving this registration.

Further Patent document 6 (WO 03096592) relates to an address updating method in which a single BU message is sent from the mobile terminal to the management node. More specifically, the same COA is included in the message. That is the document recognizes the possibility of creating multiple associations with different home addresses, but it requires all associations to be made to the same COA (cf. line 24, first column, page 5 and 42, second column, page 5).

### DISCLOSURE OF THE INVENTION

In consideration of the above-mentioned problems, it is an object of the present invention to provide an address updating method capable of transmitting a BU message while suppressing bandwidth dissipation even in a case in which a mobile node has a plurality of home addresses and a plurality of CoAs, and a mobile node, a proxy node and a management node for use in this method.

Furthermore, in accordance with claim 1 of the present invention, there is provided an address updating method of updating an address of a destination of a mobile node in a communication system including a plurality of mobile nodes and a management node made to manage a home address allocated to each of the plurality of mobile nodes and an address of a destination of the mobile node corresponding to the home address in a state associated with each other so that the management node updates the address of the destination of the mobile node, managed in the state associated, on the basis of a message notifying a changed address after changed due to movement of the mobile node, comprising a step in which a predetermined mobile node of the plurality of mobile nodes generates a single the message including the home addresses allocated to the other mobile nodes and the changed address after changed due to the movement and transmits the generated message to the management node, and a step in which the management node updates the addresses of the destinations of the plurality of mobile nodes, managed in state associated, on the basis of the received message. This arrangement enables the reception of a BU message (corresponding to the above-mentioned message) while suppressing the bandwidth consumption.

Moreover, as a preferred mode of the present invention, the address updating method according to claim 2 of the present invention, further comprises a step in which the predetermined mobile node transmits, to the other mobile nodes, a message for acquiring the home addresses allocated to the other mobile nodes and the changed address after changed due to the movement. This arrangement enables acquiring information to be included in a message. The message for acquiring the changed address corresponds to a BSync message which will be mentioned later.

Furthermore, in accordance with claim 3 of the present invention, there is provided a mobile node for use in a communication system including a plurality of mobile nodes and a management node made to manage a home address allocated to each of the plurality of mobile nodes and an address of a destination of the mobile node corresponding to the home address in a state associated with each other so that the management node updates the address of the destination of the mobile node, managed in the state associated, on the basis of a message notifying a changed address after changed due to movement of the mobile node, comprising message generating means for generating a single the message including the home address allocated to the other mobile nodes other than this mobile node and the changed address after changed due to the movement, and transmission means for transmitting the generated message to the management node. This configuration enables the reception of a BU message (corresponding to the above-mentioned message) while suppressing the bandwidth consumption. In this case, the message generating means and the transmission means correspond to a BU generator and a network interface, respectively, in a functional configuration of a mobile node which will be described later.

Still furthermore, in accordance with claim 4 of the present invention, there is provided a management node for use in a communication system including a plurality of mobile nodes and the management node made to manage a home address allocated to each of the plurality of mobile nodes, and an address of a destination of the mobile node corresponding to the home address in a state associated with each other so that the management node updates the address of the destination of the mobile node, managed in the state associated, on the basis of a message notifying a changed address after changed due to movement of the mobile node, comprising communication means for receiving the message transmitted from a predetermined mobile node of the plurality of mobile node and including the home addresses allocated to the other mobile nodes and the changed address after change due to the movement, and processing means for updating the addresses of the destinations of the plurality of mobile nodes managed in a state associated, on the basis of the received message. This configuration enables the reception of a BU message (corresponding to the above-mentioned message) while suppressing the bandwidth consumption. In this case, the communication means and the processing means correspond to a network interface and a BU processing module, respectively, in a functional configuration of a reception node which will be described later.

Yet furthermore, in accordance with dependent claim 5 of the present invention, there is provided an address updating method in a communication system including a plurality of mobile nodes, a plurality of access routers to which proxy nodes operating as proxies for the mobile nodes pertain and which are used when the mobile nodes have access to an external network and a management node whichmanages addresses of the access routers and the addresses of the mobile nodes connected to the access routers in a state associated with each other so that the management node updates the addresses of the mobile nodes connected to the access routers, managed in the state associated, on the basis of a message notifying the addresses of the mobile nodes connected to the access routers, comprising a step in which the proxy node generates a single the message including the address of the mobile node connected to the access router to which the proxy node itself pertains and transmits the generated message to the management node and a step in which the management node updates the address of the mobile node connected to the access router and managed in a state associated, on the basis of the receive message. This configuration enables the reception of a BU message (corresponding to the above-mentioned message) while suppressing the bandwidth consumption.

Moreover, as a preferred mode of the present invention, in the address updating method according dependent claim 6 to the present invention, the mobile node moves within a local range in which a change of the address of the mobile node does not occur due to the movement. This arrangement can eliminate the need for change processing on the address. In this case, the local range corresponds to an access network domain which will be mentioned later.

The address updating method according to the present invention and a mobile node, a proxy node and a management node to be used for this method have the above-mentioned arrangement and configuration so as to enable the transmission of a BU message while suppressing the bandwidth consumption even in a case in which a mobile node has a plurality of home addresses and a plurality-of CoAs.

### BRIEF DESCRIPTION OF THE DRAWINGS

[FIG. 1A] is an illustration of a configuration of a corporate network for explaining an embodiment of the present invention.
[FIG. 1B] is an illustration of a configuration of a residential network for explaining an embodiment of the present invention.
[FIG. 2] is an illustration of one example of a configuration of a MN (mobile node) according to an embodiment of the present invention.
[FIG. 3] is an illustration of one example of a configuration of a reception node (management node) according to an embodiment of the present invention.
[FIG. 4A] is an illustration of one example of a format of a BU message according to an embodiment of the present invention.
[FIG. 4B] is an illustration of one example of a configuration of a home address option of a BU message according to an embodiment of the present invention.
[FIG. 4C] is an illustration of one example of a configuration of a CoA option of a BU message according to an embodiment of the present invention.
[FIG. 4D] is an illustration of one example of a configuration of a MNP option of a BU message according to an embodiment of the present invention.
[FIG. 4E] is an illustration of one example of a configuration of a binding map option of a BU message according to an embodiment of the present invention.
[FIG. 4F] is an illustration of one example of a configuration of a security verification option of a BU message according to an embodiment of the present invention.
[FIG. 5] is a flow chart showing one example of a processing flow in a MN (mobile node) according to an embodiment of the present invention.
[FIG. 6] is a flow chart showing one example of a processing flow in a receiver node (management node) according to an embodiment of the present invention.
[FIG. 7A] is an illustration of one example of a configuration of a network for explaining an embodiment of the present invention.
[FIG. 7B] is a sequence chart showing one example of a sequence of a message in a network for explaining an embodiment of the present invention.
[FIG. 8] is an illustration of one example of another configuration of a network for explaining an embodiment of the present invention.

### BEST MODE FOR CARRYING OUT THE INVENTION

The present invention involves signaling between a sender node (for example, mobile node) and a receiver node (for example, home agent) with respect to a BU message (which sometimes will hereinafter be referred to simply as a BU) for the registration of binding of a plurality of home addresses and/or a plurality of CoAs. In the disclosure of the present invention, although the sender node is assumed to be a mobile node, a person skilled in the art would recognize that this is for the convenience and simplicity of the description of the present invention only. In addition, a person skilled in the art would recognize that the term "mobile node" signifies a mobile host made to operate under the mobile IPv6 protocol or a mobile router made to operate under the NEMO Basic Support Protocol. According to the present invention, there are three methods each of which can enable the registration of a plurality of home addresses through the use of only one BU message.

The first method is for a plurality of home addresses to be manually configured as being linked with each other. That is, a receiver node (for example, home agent) generates a list of home addresses linked with a predetermined home address of the plurality of home addresses. This signifies that, at a receiver node (for example, home agent) of a BU message; a special configuration option is given so as to allow a manager to link a plurality of home addresses with each other. In a case in which the home addresses are linked with each other, upon receipt of a BU including a binding registration of a certain home address, the home addresses linked with each other are updated simultaneously with the same information include in the received BU message. That is, according to an embodiment of the present invention, a single BU message is used for the registration of bindings for a plurality of home addresses, thus achieving the object of the present invention.

The second method is such that a mobile node transmits a first BU message informing a receiver node of a list of home addresses linked with each other. That is, the mobile node generates a list of the home addresses linked with a predetermined home address of a plurality of home addresses and transmits the generated list in a state included in a message (BU message) to be transmitted in the first place. Following this, when a BU message including the binding registration at a certain home address occurs continuously, it also applies to all the addresses linked with this home address. This depends upon indefinite continuation, a clear statement of a valid term of a link in a first BU message by a mobile node or a future transmission of a BU message indicative of the cancellation of a link by a mobile node.

In the above-mentioned two methods, the link of the home addresses can take one way or two way. This signifies that the link is set up in a manner such that the first home address is linked with the second home address so that the binding is also applied to the first home address only when the binding registration is received with respect to the second home address. However, when the binding registration is received in conjunction with the first home address, the binding is not applied to the second home address. This means one-way linkage. On the other hand, a two-way linkage signifies that the binding registration received in conjunction with one of the home addresses linked with each other is also applicable to the other linked home addresses.

The third method is such that a mobile node uses a set of options in a single BU message so as to specify a plurality of bindings. This is a versatile and flexible method, which will be mentioned in detail later. A person skilled in the art would recognize that the above-mentioned three methods can be implemented in an embodiment which will hereinafter be described.

Secondly, a detailed description will be given of a receiver node and mobile node with respect to a BU message which carries out the present invention.

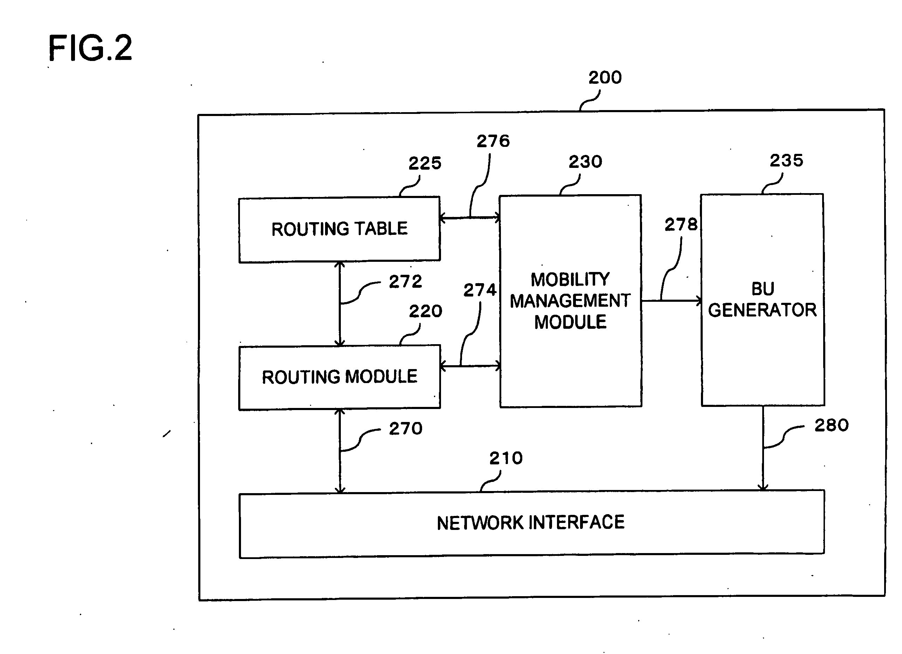

FIG. 2 shows one example of a functional configuration 200 of a mobile node. The functional configuration 200 includes one or a plurality of network interfaces 210, a routing module 220, a routing table 225, a mobility management module 230 and a BU generator 235. The network interface 210 serves as a functional block including all hardware and software needed for the mobile node (which corresponds to the above-mentioned transmission means, for example, which transmits a generated BU message to a receiver node) for communicating with other node through a certain communication means. Using terminology well known among relevant technologies, the network interface 210 is expressed as communication element, firmware, driver and communication protocol of layer 1 (physical layer) and layer 2 (data link layer).

The routing module 220 handles all the determination as to how to route a packet (corresponding to the above-mentioned router determining means, for example, determining a route at the reception or transmission of a packet). Using terminology well known among relevant technologies, the routing module 220 is expressed as an entity of layer 3 (network layer) such as internet protocol version 4 or 6. For assisting the determination within the routing module 220, the routing table 225 includes a rule(s) for managing the routing of a packet (corresponding to the aforesaid route table).

Preferably, the routing table 225 includes a list of routing entries, and each of the routing entries specifies the network interface 210 allowing a packet to pass on the basis of an address of the next hop node and/or a destination address seen from a packet, a source address or other information. A signal/data path 272 allows the routing module 220 to update entries in the routing table 225 and extracts the entries from the routing table 225. A signal/data path 270 allows the routing module 220 to receive a packet from the network interface 210 and transfer a packet to the network interface 210.

The mobility management module 230 is for managing the mobility of the mobile node (corresponding to the aforesaid mobility managing means). This signifies that the mobility management module 230 implements the mobile IPv6 protocol when the mobile node is a mobile host while carrying out the NEMO Basic Support Protocol if the mobile node is a mobile router. The mobility management module 230 also conduct the processing on a message related to the mobility management. For assisting the mobility management module 230, the BU generator 235 serves as a sub-module made to generate the contents of a BU message to be sent to home agents (or CNs) (corresponding to the aforesaid message generating means, for example, generating a single message (BU message) including information needed for the registration of, for example, the changed address (CoA or the like) in a management node (receiver node) in a state associated with a plurality of home addresses).

As will be mentioned later, the BU generator 235 is a main functional block provided in the present invention. A signal/data path 278 allows the mobility management module 230 to inform the BU generator 235 of information needed for the generation of a BU message. A signal/data path 276 allows the mobility management module 230 to read out or correct routing entries from the routing table 225 according to the mobility of the mobile node. A signal/data path 274 allows packets to pass between the mobility management module 230 and the routing table 220.

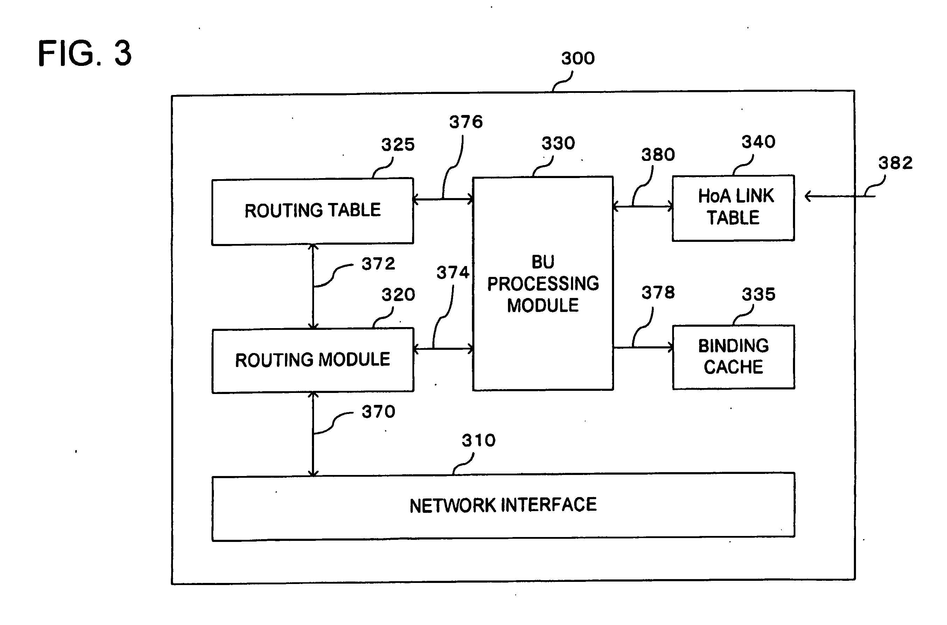

FIG. 3 shows one example of a functional configuration 300 of a receiver node (home agent or the like) of BU. The functional configuration 300 includes one or a plurality of network interfaces 310, a routing module 320, a routing table 325, a BU processing module 330, a binding cache 335 and an HoA link table 340. The network interface 310 is a functional block including all hardware and software needed for a receiver node for the communication with other nodes through a certain communication means (corresponding to the aforesaid communication means made to make communications with the external (mobile node or the like)). Using terminology well-known among relevant technologies, the network interface 310 is expressed as communication element, firmware, driver and communication protocol of layer 1 (physical layer) and layer 2 (data link layer).

The routing module 320 handles all the determination as to how to route a packet (corresponding to the above-mentioned router determining means, for example, determining a route at the reception or transmission of a packet). Using terminology well known among relevant technologies, the routing module 320 is expressed as an entity of layer 3 (network layer) such as internet protocol version 4 or 6. For assisting the determination within the routing module 320, the routing table 325 includes a rule(s) for managing the routing of a packet (corresponding to the aforesaid route table, for example, including a rule (s) to be used by the route determining means).

Preferably, the routing table 325 includes a list of routing entries, and each of the routing entries specifies the network interface 310 allowing a packet to pass on the basis of an address of the next hop node and/or a destination address seen from a packet, a source address or other information. A signal/data path 372 allows the routing module 320 to update entries in the routing table 325 and extracts the entries from the routing table 325. A signal/data path 370 allows the routing module 320 to receive a packet from the network interface 310 and transfer a packet to the network interface 310.

The BU processing module 330 is for processing a BU message from the mobile node (corresponding to the a fore said processing means, and processing a received message (BU message)). This signifies that the BU processing module 330 carries out a function of a home agent or a CN specified by the mobile IPv6 or NEMI Basic Support Protocol. A mobility related message received by the routing module 320 is handed over through a signal/data path 374 to the BU processing module 330. Moreover, the same path is used when there is a need for the BU processing module 330 to transmit the mobility related message through the routing module 320.

The HoA link table 340 is an optional part of the function configuration 300 (corresponding to the aforesaid home address storing means, and storing a list of home addresses linked with a predetermined home address). The HoA link table 340 is needed when a receiver node permits home addresses to be placed into a linked condition so that the binding registration at one home address is applicable to the other home addresses to be linked therewith. The HoA link table 340 stores such a linkage. A signal path 382 allows a manager to manually form a linkage of home address. A signal/data path 380 allows the BU processing module 330 to store the linkage of the home addresses in the HoA link table 340 and to collect link information from the HoA link table 340.

The binding of home addresses to CoAs of mobile nodes is stored in the binding cache 335 (corresponding to the aforesaid binding storing means, and storing home addresses and destination addresses of mobile nodes in a state associated with each other). The BU processing module 330 updates the binding cache 335 through the signal/data path 378. If a new binding and an establishment of a two-way tunnel take place, the BU processing module 330 is required to modify the routing entries in the routing table 325. This is provided through the signal/data path 376. Whenever the BU processing module 330 updates the binding cache 335, it needs to check whether or not the home address to be updated has a linkage in the HoA link table 340. If a linkage exists, likewise, there is a need to update the entries in the binding cache 335 having the home addresses linked with the aforesaid home address.

The preferred configuration according to the present invention has been described above. Secondly, a description will be given hereinbelow of formats of messages to be used in the present invention. A person skilled in the art would recognize that the message formats to be described hereinbelow are compatible with currently prevailing message formats used in the relevant technical fields. However, a person skilled in the art would appreciate that the present invention is not limited to these exemplary message formats.

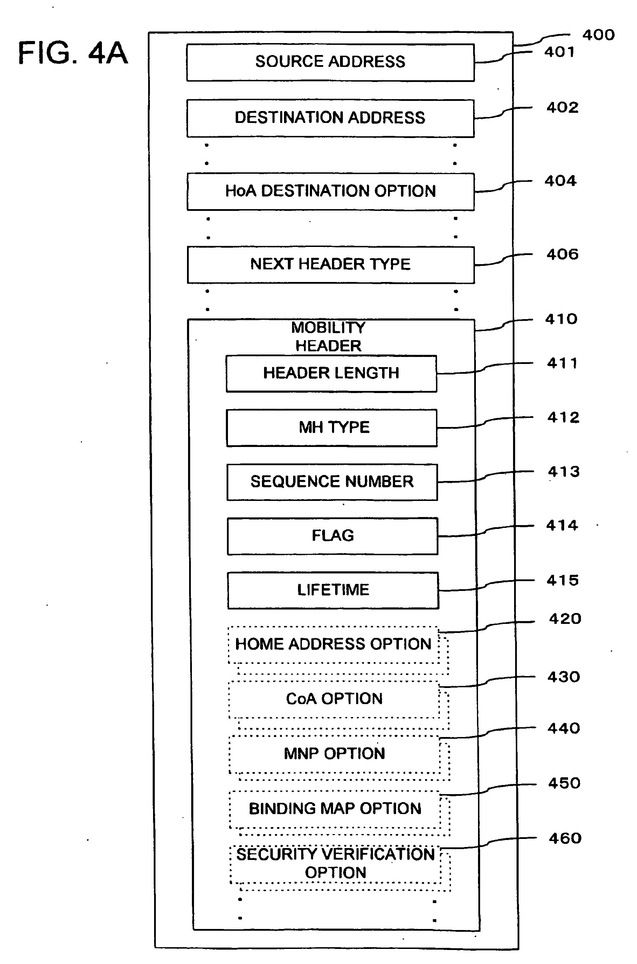

FIG. 4A is an illustration of a format of a BU message 400 to be transmitted from a sender node to a receiver node according to a preferred embodiment of the present invention.
A source address field 401 includes an address of a sender node (for example, CoA of the mobile node), a destination address field 402 includes an address of a receiver node (for example, address of the home agent or the CN). These are portions of the standard IPv6 header. A HoA destination option field 404 is a special option of an IPv6 destination option header. It is used for notifying the actual home address of a sender node to the receiver node. A next header type field 406 is indicative of the type of a header subsequent to the current one. This is used by the receiver node at the processing on a received message for the determination of the type of a header to be processed next. The message 400 is a BU message and, hence, it include a mobility header 410. The mobility header 410 follows the next header type field 406 including a number indicating that the next header is a mobility header.

The mobility header 410 includes a header length field 411 indicative of a total length of the header and a MH type field 412 indicative of a type of a mobility message. The value contained in the MH type field 412 depicts a BU message. The mobility header 410 further includes a sequence number field 413, a flag field 414 and a lifetime field 415. The sequence number field 413 is used for the synchronization between a BU message and a binding acknowledgment message. The flag field 414 is composed of a series of bits including a bit of "1" or "0" indicative of the setting or clearing (no establishment) of a special flag. For example, the setting of a special bit informing a receiver that a sender is a mobile router while the clearing of the special bit informs the receiver that the binding acknowledgment is unnecessary. The lifetime field 415 is indicative of the valid termof the binding specified in the BU message 400. The actual binding information is contained in an option inserted into the mobility header 410.

According to the present invention, a plurality of home addresses and/or a plurality of CoAs are specified in a single BU message. An embodiment of the present invention uses new mobility header options (home address option 420, binding map option 450, security verification option 460). Other possible options are a CoA option 430 and a MNP option 440.

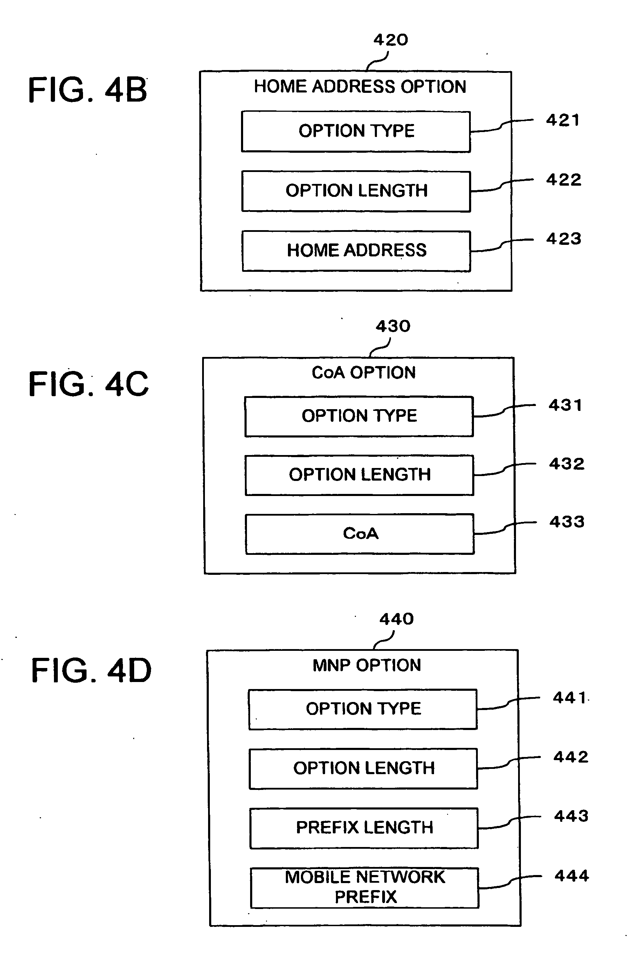

The home address option 420, as shown in FIG. 4B, is for communicating an additional home address to the binding. In an embodiment of the present invention, it is possible that zero, one ormore home address options 420 exist in a BU message. If no home address option 420 exists in the BU message, a plurality of home addresses are not put to use. In this case, the home address used in the binding is acquired from the HoA destination option 404 in the other headers of the message (packet) 400. The home address option 420 includes an option type field 421 indicating this option as the home address option 420, an option length field 422 indicative of a size of this option and a home address field 423 including a home address.

According to an embodiment of the present invention, each of the home address options 420 includes only one home address. When a plurality of home addresses are used in binding, a plurality of home address options 420 are inserted into a BU message. A person skilled in the art would recognize that the home address option 420 can be configured to contain an array of the home address fields 423, that is, one or more home addresses can be put in a single home address option 420. In addition, a person skilled in the art would recognize that other fields, such as preference, priority or home address identification number, which are not mentioned herein, can be put in the home address option 420. This does not affect the scope or ambit of the present invention.

The CoA option 430 shown in FIG. 4C is for communicating an additional CoA to the binding. In an embodiment of the present invention, it is possible that zero, one or more CoA options 430 exist in a BU message. If no CoA option 430 exists in the BU message, a plurality of CoAs is not put to use. In this case, the CoA used in the binding is acquired from the source address field 401 in the other headers of the message (packet) 400. The CoA option 430 includes an option type field 431 indicating this option as the CoA option 430; an option length field 432 indicative of a size of this option and a CoA field 433 including a CoA.

According to an embodiment of the present invention, each of the CoA options 430 includes only one CoA. When a plurality of CoAs is used in binding, a plurality of CoA options 430 is inserted into a BU message. A person skilled in the art would recognize that the CoA option 430 can be configured to contain an array of the CoA fields 433, that is, one or more CoAs can be put in a single CoA option 430. In addition, a person skilled in the art would recognize that other fields; such as preference, priority or CoA identification number, which are not mentioned herein, can be put in the CoA option 430. This does not affect the scope or ambit of the present invention.

A mobile network prefix (MNP) option 440 shown in FIG. 4D is for notifying a MNP related to binding. This is used in a case in which the sender of the BU message 400 is a mobile router. According to an embodiment of the present invention, zero, one or more MNP options 440 can exist in the BU message. If no MNP option 440 exists in the BU message, the actual MNP that is allocated to the sending mobile router may be determind by the receiving home agent using other means (such as statically configured). The MNP option 440 includes an option type field 441 indicating this option as a MNP option, an option length field 442 indicative of a size of this option, a prefix length field 443 indicative of the number of significant bits in a MNP, and a mobile network prefix (MNP) field 444 including a MNP.

According to an embodiment of the present invention, each of the MNP options 440 includes only one MNP. When a plurality of MNPs is used in binding, a plurality of MNP options 440 is inserted into a BU message. A person skilled in the art would recognize that the MNP option 440 can be configured to contain an array of the prefix length fields 443, that is, one or more MNPs can be put in a single MNP option 440. In addition, a person skilled in the art would recognize that other fields, such as preference, priority or MNP identification number, which are not mentioned herein, can be put in the MNP option 440. This does not affect the scope or ambit of the present invention.

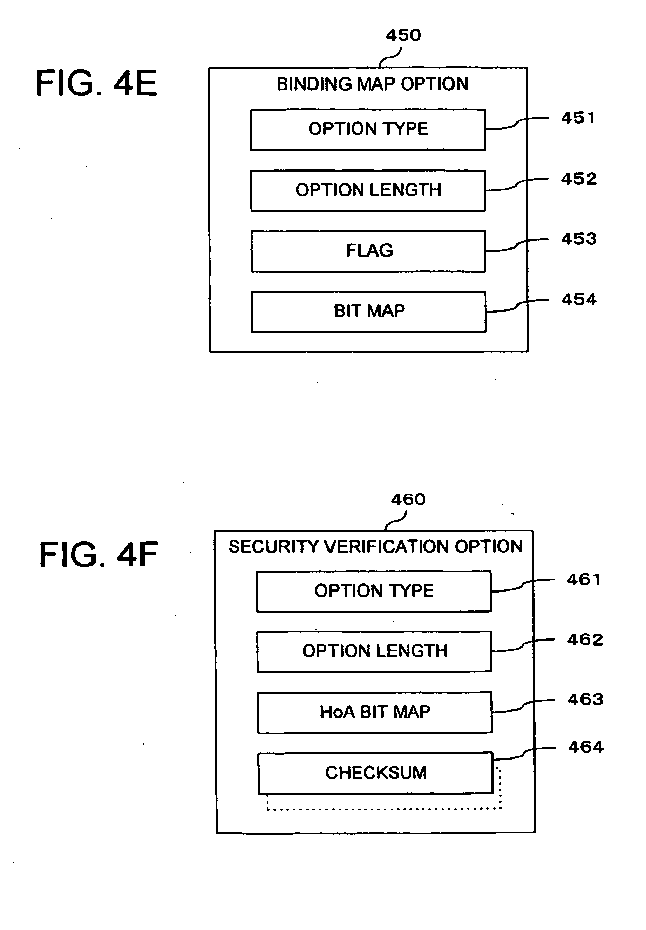

A binding map option 450, as shown in FIG. 4E, indicates how each of a plurality of home addresses specified in the BU message 400 is bound to the other information notified by the BU message 400. According to an embodiment of the present invention, each binding map option 450 to be used binds each type of information (CoA or MNP) to a plurality of home addresses. It is possible that zero, one or more binding map options 450 exists in a BU message.

If the BU message includes a plurality of home addresses without any binding map option 450, a receiver can assume that all information are bound to each of the home addresses specified in the BU message. The binding map option 450 includes an option type field 451 indicating this option as a binding map option, an option length field 452 indicative of a size of this option, a flag field 453 indicative of the contents of information bound to the home address and a bit map filed 454 including the actual binding matrix.

A description will be given hereinbelow of an exemplary implementation in order to explain how the binding map option 450 works. In this case, the flag field 453 contains different bits, and these bits can be set or cleared for indicating the presence or absence of states. One of the bits in the flag field 453 becomes a C bit. When the C bit is set, it indicates that the binding matrix specified in the bit map field 454 becomes CoA binding to home addresses. A N bit exists as another bit in the flag field 453. The setting of the N bit indicates that the binding matrix specified in the bit map field 454 becomes MNP binding to home addresses.

A H bit exists as a further bit in the flag field 453. When the H bit is set, the home address specified in the HoA destination option 404 is handled as the first home address and the home address specified in the first home address option 420 is handled as the second home address. On the other hand, the H bit is cleared, the home address specified in the HoA destination option 404 is ignored, and the home address specified in the first home address option 420 is handled as the first home address and the home address specified in the second home address option 420 is handled as the second home address.

A S bit exists as a further bit in the flag field 453.
When the S bit is set, the home address specified in the source address field 401 is handled as the first CoA and the CoA specified in the first CoA option 430 is handled as the second CoA. On the other hand, the S bit is cleared, the home address specified in the source address field 401 is ignored, and the CoA specified in the first CoA option 430 is handled as the first CoA and the CoA specified in the second CoA option 430 is handled as the second CoA.

A L bit exists as a preferable bit in the flag field 453. When the L bit is set, the binding matrix specified in the bit map matrix 454 is handled as a home address link matrix. This is used in the receiver node for establishing a linkage of home addresses. The receiver node puts (stores) link information, specified in the bit map field 454, in the HoA link table 340.

The bit map field 454 includes a mapping matrix concatenated as a single consecutive bit string (which is a mapping matrix indicative of how an address (CoA or the like) after changed is bound to each of a plurality of home addresses) . For example, M home addresses are specified and a maximum of N other parameters (the other parameters are CoAs and/or MNPs, but not limited thereto) exist, where M and N are positive integers). A single arrangement has M x N bits in total. In this case, the first N bits in the bit map field 454 indicate the parameters bound to the first home address, and the second N bits in the bit map field 454 indicate the parameters bound to the second home address.

A further preferred arrangement is a block of N bits and, when the first bit of the block is set at "1", it indicates that the first set of parameters is bound to the corresponding home address while, when the first bit of the block is set at "0", it indicates that the first set of parameters is not bound to the corresponding home address. Likewise, if the second bit of the block is set at "1", it indicates that the second set of parameters is bound to the corresponding home address while, when the second bit of the block is set at "0", it indicates that the second set of parameters is not bound to the corresponding home address.

For a clear understanding of the present invention to persons skilled in the art, the above-mentioned example will be described in detail through the use of actual numerical values. Let it be assumed that a BU message contains 3 home addresses, 4 CoAs and 2 MNPs. The flag field 453 in the binding map option 450 indicates both the CoA and MNP specified in the binding bit map. In this case, M = 3 and N = 4 (this is because the number of CoAs is larger than the number of MNPs). Thus, the bit map field 454 includes 3 x 4 = 12 bits. Let it be assumed that the bit string of the bit map field 454 is "110010010111".

At this times the first block of 4 bits is "1100" which indicates that the first and second CoAs and the first and second MNPs are bound to the first home address. Moreover, the second block of 4 bits is "1001" which indicates that the first and fourth CoAs and the first MNP are bound to the second home address. Because there are only 2 MNPs, the last 2 bits are ignored in the MNP. Still moreover, the third block of 4 bits is "0111" which signifies that the second, third and fourth CoAs and the second MNP are bound to the third home address.

A person skilled in the art would recognize that the above-mentioned example is a special arrangement for explaining a case in which the first CoA and the first MNP are always bound to the same set of home addresses and the second CoA and the second MNP are always bound to the same set of home addresses. This is because the same mapping matrix is allocated to a set of CoAs and a set of MNPs in the bit map field 454 and the flag field 453 indicates that the binding map option 450 contains the mapping for both the CoAs and MNPs.
In practice, this is not limited to that case.

In a case in which a set of CoAs and a set of MNPs have different mapping matrixes, separate binding map options 450 are used, and a single binding map option 450 is used with respect to each set of parameters. According to an embodiment of the present invention, each binding map option 450 includes only one binding matrix. It is obvious to a person skilled in the art that the binding map option 450 can be configured to include an array of the flag fields 453 and an array of the bit map fields 454, and it is possible that one or more mapping matrixes are put in a single binding map option 450.

A security verification option 460, as shown in FIG. 4F, is for a receiver node to confirm the authority and reliability of a BU message 400. According to an embodiment of the present invention, zero or one security verification option 4 60 exists in a BU message. The security verification option 4 60 includes an option type field 461 indicating this option as a security verification option, an option length field 462 indicative of a size of this option, a HoA bit map field 463 indicative of a home address to be used for the security verification and a checksum field 464 containing a cryptographic checksum to be used for verifying the reliability on the basis of a single home address.

The reason why the security verification option 460 is necessary is that, in the mobile IPv6 or NEMO Basic Support, the allocation of a home address to a mobile node is usually conducted by a security key for the purpose of verification. In fact, both the mobile IPv6 and NEMO Basic Support require that a mobile node has a security association with its own home agent for the protection of integrity of the BU message.

If the BU message contains a plurality of home addresses, there is a need to check which of associated security keys of home addresses should be used by the mobile node for the protection of the binding update. One approach is to use all the keys of all the home addresses for the protection of the BU message. However, according to a conventional technique, the security key to be used for the protection of a BU message is usually associated with the home address specified in the HoA destination option 404. If one or more keys (for example, due to a plurality of home addresses) are put to use, it confuses the receiver and, consequently, the receiver rejects the BU message in error.

For eliminating this, an embodiment of the present invention employs the security verification option 460. Each of the keys associated with all the home addresses specified in the BU message 400 is used for generating a cryptographic checksum on the basis of the contents of the BU message. One method for the generation of the checksum is to apply a hash function to the contents of the BU message on the basis of the security key associated with the home address.

Since the contents stored in the checksum field 464 are not known before the application of the hash function, the contents of the checksum field 464 is usually assumed to be all zero at the calculation of the checksum. The receiver node carries out the same method in order to verify the reliability of a received BU message through the calculation of the checksum based on the security key associated with each home address. The contents of the checksum filed 464 are set to be all zero when the receiver node is calculating a checksum for the arrival at the same hash value. The result of the hash is compared with the received checksum field 464 for the verification of reliability.

The HoA bit map field 463 in the security verification option 4 60 is for indicating a key associated with a home address to be used for the generation of a checksum. For example, let it be assumed that the BU message 400 includes 3 home addresses and the authentication is required with respect to only the first and third home addresses (for example, only the first and third home addresses have keys associated therewith). In this case, the security verification option 460 includes a an HoA bit map field 463 having a bit string of "101" and an array of 2 checksum fields 464. The bit string of "101" in the HoA bit map field 463 indicates that only the first and third home addresses are used for the authentication. The first checksum field 464 contains a cryptographic checksum generated from the security key associated with the first home address, and the second checksum field 464 contains a cryptographic checksum generated from the security key associated with the third home address.

In the above description, a person skilled in the art would recognize that the security verification option 460 has flexibility. Through the use of the HoA bit map field 463, a receiver can use selectively the security keys associated with different sets of home addresses for the purpose of authentication. This allows the mobile node to acquire two home addresses from one ISP and one home address from the other ISP. The first ISP can provide only one security key to two home addresses, while the second ISP can offer the other key to the third home address. Thus, by using the HoA bit map field 464, as illustrated through the above-described example, the mobile node can provide selectively authentication checksums for only the first and third home addresses.

According to an embodiment of the present invention, only one security verification option 460 exists in one BU message. However, a person skilled in the art would recognize that the present invention can be carried out by a plurality of security verification options 460. Each of the security verification options 460 includes a single checksum field 464. The BoA bit map field 463 is not required in such cases. In fact, the binding map option 450 uses each security verification option 460 with respect to the corresponding home address. It is possible that the security verification option 460 is combined with the home address option 420. In this case, the checksum field 464 works in place of the home address option 420.

The above description has been made with respect to the possible formats and contents of a BU message 400 which allows a mobile node to register a plurality of home addresses and about the flexibility of parameters associated with binding of each home address. A person skilled in the art would recognize that the same set of options could also be included in a binding acknowledgment message to be sent by a receiver node of the BU message in response to a binding registration. This is particularly useful when the receiver of the BU message rejects a certain binding. In such cases, the receiver places the rejected binding in a binding acknowledgment message. Instead, the receiver node can also specify, in the binding acknowledgment message, the binding acceptable by the receiver node.

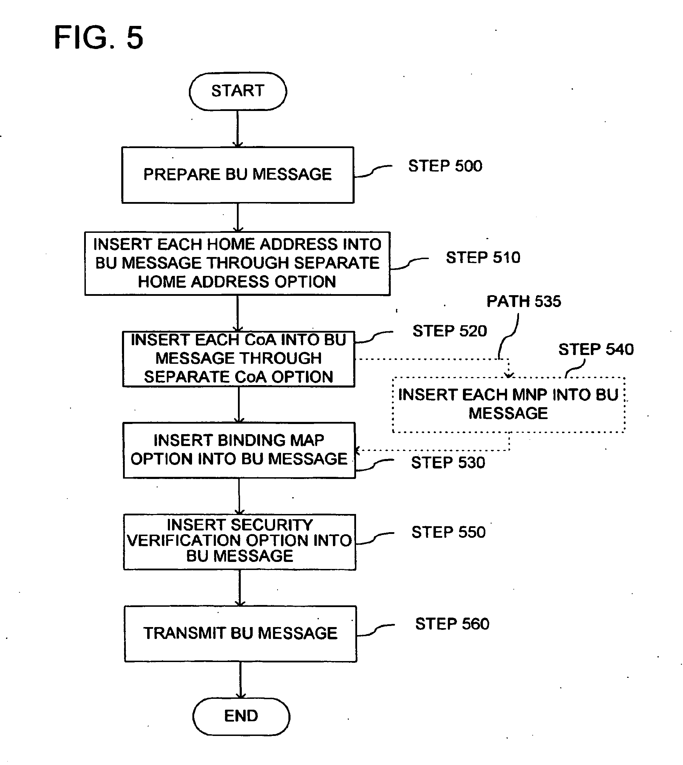

Following the description of the formats and contents of messages to be used in the present invention, the preparation and processing on a message will be described hereinbelow. Referring to a flow chart of FIG. 5, a description will be given hereinbelow of a flow of the processing in the BU generator 235 of amobile node for the preparation of a BUmessage according to an embodiment of the present invention. In a step 500, first of all, the mobile node prepares an empty BU message. In a step 510, each home address is inserted into the BU message by use of a separate home address option. Subsequently, in a step 520, each CoA is inserted into the BU message by use of a separate CoA option. In a case in which the mobile node is a mobile router, as the operational flow advances through a path 535 to a step 540 for inserting each MNP into the BU message as a separate MNP option, then followed by a step 530.

In a case in which the mobile node is not the mobile router, or if no MNP to be registered exists, the operational flow proceeds to the step 530 in which the actual binding for each home address is specified in one or more binding map options inserted into the BU message (the binding map option is inserted into the BU message). When needed, the BU generator 235 generates a checksum for each security key associated with each home address based on the current contents of the BU message and inserts it as a security verification option into the BU message as a step 550. Lastly, the BU message is transmitted in a step 560.

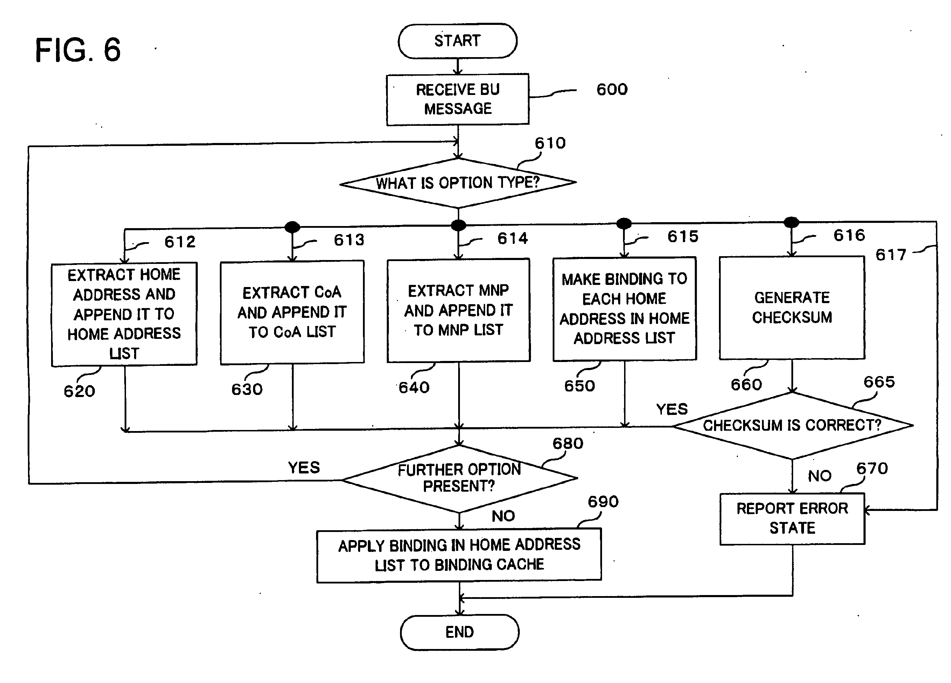

FIG. 6 is a flow chart showing the processing on a received BU message in the BU processing module 330 of a receiver node (for example, home agent). In a step 600, upon receipt of a BU message, the BU processing module 330 analyzes the respective options in the BU message. In a step 610, the BU processing module 330 distributes the options to the paths 612 to 617 according to their option types (distribution depending upon option types). If the option is a home address option, the operational flow advances through the path 612 to a step 620. In the step 620, a home address specified in the home address option is extracted and put in a home address list.

If the option is a CoA option, the operational flow advances through the path 613 to a step 630. In the step 630, a CoA specified in the CoA option is extracted and put in a CoA list. If the option is a MNP option, the operational flow advances through the path 614 to a step 640. In the step 640, a MNP specified in the MNP option is extracted and put in a MNP list. When the options is a binding map option, the operational flow proceeds through the path 615 to a step 650. In the step 650, a binding specified in the binding map option is inspected and a parameter indicated thereby is bound to each home address in the home address list.

The binding is stored beside the home addresses in the home address list. When the option is a security verification option, the operational flow proceeds through the path 616 to a step 660. In the step 660, the BU processing module 330 generates a checksum by use of a security key associated with an home address specified in the HoAbit map field of the security verification option, and in a step 665, it makes a comparison between the generated checksum and a value stored in the checksum field of the security verification option (confirm whether or not the checksum is correct). If the checksum does not agree with it, an error condition is reported in a step 670, and the BU message processing then comes to an end.

In the switching step 610, if an error occurs during the processing on the current option in the BU message, the operational flow proceeds through the path 617 to a step 670. In the step 670, the error condition is reported, and the BU message processing then comes to an end. In a case in which the option processing terminates without occurrence of the error, in a step 680, a check is made whether or not there is a non-processed option in the BU message. If the non-processed option exists, the operational flow returns to the step 610 for conducting the processing on the non-processed option. If no non-processed option exists, the operational flow goes to a step 690 to apply the binding stored in the home address list to the binding cache 335. Although not shown in FIG. 6, in a case in which a receiver node carries out a home address link method according to the embodiment of the present invention, when the binding cache 335 is updated in the step 690, the BU processing module 330 looks into the HoA link table 340 so as to check whether or not a linkage of home address to be updated exists, and updates the home address linked with the home address to be updated.

The point of the present invention has been described above through the embodiment. Furthermore, a description will be given hereinbelow of various scenarios where the present invention can be put to use. First, consideration is given to the corporate network as shown in FIG. 1A. A plurality of home addresses is allocated to a mobile node pertaining to one or more departments. In this example, the mobile node is a laptop (portable computer) of a customer support engineer (CSE) who needs to gain access to an engineering department subnet 122 for reading a technical document and needs to gain access to a sales department subnet 124 for retrieving customer information. The corporation usually equips employee's laptop with wireless ethernet (registered trademark) and 3G area network access cards. When the CSE goes away from the office, the employee' s laptop has two home addresses and two CoAs. In addition, for security reasons, the corporation requires security verification when an external node attempts to register a home address. Still additionally, each home address of the CSE is associated with a separate security key.

In this case, a BU message to be transmitted from the laptop of the CSE includes: two home address options, one for each home address; two CoA options, one for each CoA; a binding map option specifying a value of "1111" in a bit map field, which indicates that both CoAs are bound to each home address; and a security verification option containing two checksums, one for each cryptographic hash generated from a security key associated with each home address.

Secondly, consideration is given hereinbelow to a residential network 104 described above with reference to FIG. 1B. In FIG. 1B, as mentioned above, the residential network 104 establishes a connection through two ISPs 106 and 108 to a global network 100. Each of the ISPs hands over a single network prefix to the residential network 104, and the network prefix is managed by a home agent 114. In a case in which a user has a mobile personal area network (PAN), two home addresses and two MNPs are allocated to a mobile router in the PAN. Let it be assumed that the mobile router has only a single wireless LAN (WLAN) interface. When the mobile router goes away, the mobile router acquires only one CoA from an access network with which the mobile router is currently in connection. Since the residential network is relatively unexacting in security, the home agent HA 114 only allocates a security key, used at one of the two home addresses, to the mobile router.

A BU message transmitted from the mobile router includes: one home address option specifying one home address, with the other home address being specified in a HoAdestination option; no CoA option (CoA in a source address filed is put to use); two MNP options, one for each MNP; two binding map options, the first being for definitely showing the binding of a CoA in the bit map field containing a value of "11" for indicating the CoA to be bound to both home addresses and the second being for definitely showing the binding of a MNP in the bit map field containing a value of "1001" for indicating each MNP to be bound to only each home address; and a security verification option containing only one checksum for a cryptographic hash generated from a security key.

A more detailed description will be given hereinbelow of the above-mentioned PAN example for making clear one advantage of the present invention. In this case, let it be assumed that a plurality of mobile routers, but not single, exist in the PAN. For example, the mobile routers can be a mobile phone or a personal digital assistant equipped with a WLAN interface card. According to conventional techniques, each mobile router individually transfers its own BU to a home agent. On the other hand, according to the present invention, a plurality of home addresses is specified in a BU message. That is, two mobile routers can insert their own bindings into a single BU message to be transmitted to the home agent. This results in suppressing a wasteful use of a precious wireless bandwidth. Moreover, if a wireless access is charged, the cost is suppressible by inserting a separate BU message into a single BU message. According to an embodiment of the present invention, one or a plurality of mobile nodes can possess a plurality of home addresses specified in a single BU message. This will be described through the use of the following example.

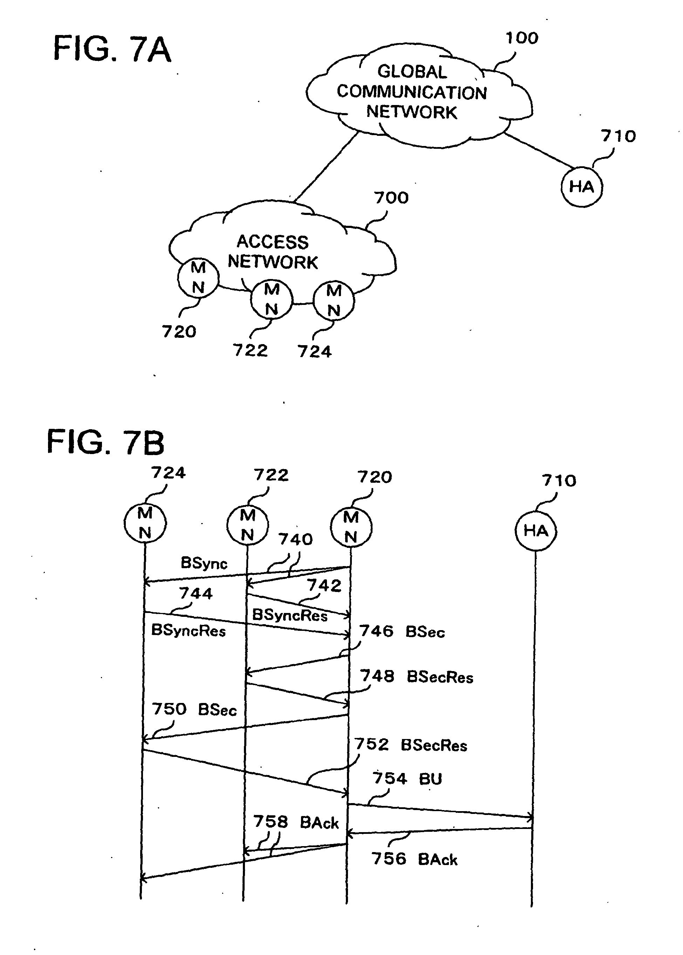

FIG. 7A is an illustration of a scenario in which mobile nodes MN 720, 722 and 724 move together and share one home agent HA 710. These mobile nodes MN 720, 722 and 724 are accessible through an access network 700 to a global communication network 100. These mobile nodes MN 720, 722 and 724 can lie in all portions of a PAN. The present invention allows a plurality of home addresses and a plurality of CoAs to be specified in a single BU message and provides the flexibility on the specification of any possible configuration of bindings among these addresses, and can suppress the wasteful use of an uplink bandwidth by these mobile nodes by inserting these BUs into a single message. With reference to FIG. 7B, a description will be given hereinbelow of a message sequence whereby this is achievable.

In FIG. 7B, the MN 720 has a function to transmit a BU message to a HA 710. For acquiring the home addresses and CoAs of the MN 722 and MN 724, the MN 720 first broadcasts a binding synchronization (BSync) message 740 to the MN 722 and the MN 724. The BSync message 740 is for making a request to each of receivers for a response in which the home addresses and CoAs thereof and other binding parameters (such as MNPs) are included in a binding synchronization response (BSyncRes) message 744 to the sender. The communications between the mobile nodes are made through the use of separate communication means (Bluetooth (registered trademark), InfraRed, other types of the PAN technology, or the like). Alternatively, it is conducted through communication means available in the access network 700.

Upon receipt of the BSync message 740, the MN 722 and the MN 724 make responses by transmitting BSYNCRes messages 742 and 744, respectively, to the MN 720. The MN 720 incorporates the binding information into a single BU message to be transmitted to the HA 710. If the HA 710 does not require the security verification, the BU message 754 is transmitted immediately (without requiring messages 746 to 752). When it requires the security verification, two situations are conceivable. The first situation is that the MN 720 actually provides data for security verification by using security keys for the MN 722 and the MN 724. For example, this situation takes place when three mobile nodes are tightly associated in a personal network in view of security or the like.

In this case, there is no need for messages 746 to 752, so the MN 720 can transmit the BU message 754 immediately. The second situation is that, although the security verification is necessary, each of the mobile nodes has its own security key. This can occur in a scenario such as a team of corporate users. In this case, the MN 720 is required to make a request to the other mobile node for a supply of a cryptographic checksum in the BU message. This depends on binding security (BSec) messages 746, 750 and binding security response (BSecRes) messages 748, 752.

In the example shown in FIG. 7B, the MN 720 first transmits a BU message to the MN 722 through the use of a BSec message 746. This allows the MN 722 to generate a checksum on the basis of the contents of the BU message and to transmit the checksum through the BSecRes message 748. The MN 720 transmits the BU message to the MN 724 through the use of the BSec message 750 at this time. This allows the MN 724 to generate a checksum on the basis of the contents of the BU message and to transmit the checksum through the use of the BSecRes message 752. A person skilled in the art would recognize that the MN 720 transmits the same BSec message simultaneously to the MN 722 and the MN 724 (preferably, transmitting it through the use of a broadcast message). As described above in the present invention, the generation of the security checksum is for ignoring the values of the other security checksums in the BUmessage. Thus, it allows the MN 722 and the MN 724 to generate their own checksums independently.

When the MN 720 receives the BSecRes message, the MN 720 can transmit the BU message 754 to the HA 710. After incorporating the binding information into the (BU message, the HA 710 can make a response in an optional manner by a binding acknowledgement (BAck) message 756. The MN 720 can optionally relay the acknowledgment message to the MN 722 and the MN 724 by broadcasting BAck message 758 to inform the other mobile nodes of the status of their respective binding registrations.

For the application of the present invention in the examples shown in FIGs. 7A and 7B, the mobile nodes usually bind their own CoAs to their own home addresses. That is, it is conceivable that the BU message 754 includes: three home address options for the home addresses of the MN 720, the MN 722 and the MN 724; three CoA options for the CoAs of the MN 720, the MN 722 and the MN 724; a binding map option specifying the values of "100", "010" and "001" in the bit map field, which indicate that the first CoA is bound to the first home address, the second CoA is bound to the second home address and the third CoA is bound to the third home address; and a security verification option including three checksums for cryptographic hashes generated from security keys associated with the home addresses.

A characteristic application of the present invention is when mobile nodes co-operate further to relay packets for each other. In FIGs. 7A and 7B, the BU message 754 can include the values of "111", "111" and "111" in the bit map field of the binding map option, which indicates that all the three CoAs are bound to all the three home addresses. This signifies that three mobile nodes share their own CoAs. When the MN 720 receives a packet through its own CoA, the final destination is not the MN 720, but it is the home addresses of the MN 722 or the MN 724. This is because the CoA of each of the mobile nodes is bound to the home addresses of all the mobile nodes. In this case, the mobile nodes transfer packets to the actually intended destination mobile nodes.

This provides advantages. The first advantage is that each mobile node has an alternate arrival path, and the arrival is accomplished through a global network, which enhances the reliability of communication by the mobile nodes. The other advantage is of importance and is that the mobile nodes lie within an access network, which regulates the quantities of bandwidths distributed to the respective mobile nodes (for the purpose of the guarantee of QoS or the saving of cost). Let it be assumed that a bandwidth of a maximum of 64 kbps is distributed to each of the mobile nodes. In a manner such that all the three CoAs are bound to all the home addresses, three separate channels of 64 kbps can be aggregated into a single 192-kbps channel. When a certain mobile node uses their CoAs, the channels distributed to the other mobile nodes are usable for the temporary enhancement of the bandwidth.

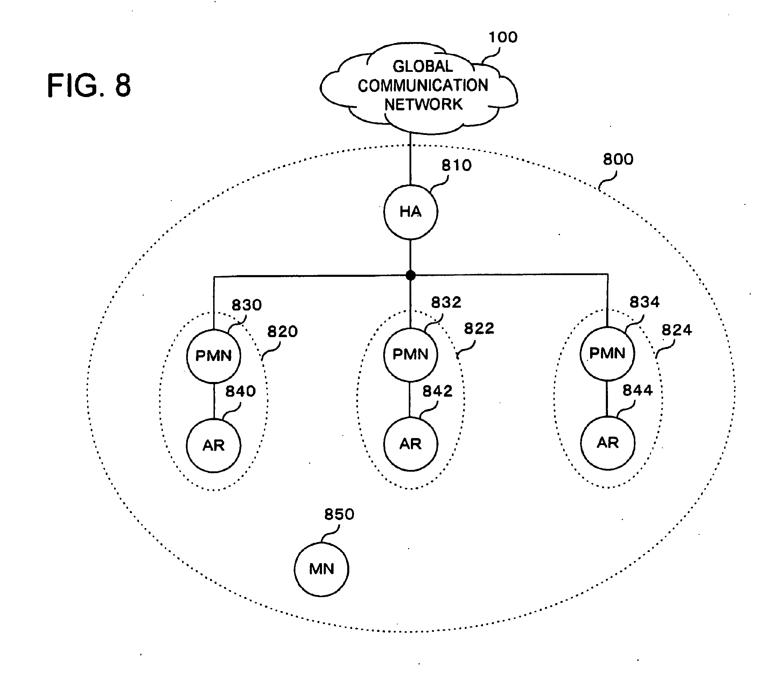

Another application of the present invention is in the field of local mobility management. This will be described hereinbelow with reference to FIG. 8. In this case, an access network domain 800 is in connection with a global communication network 100 such as the internet. In the access network domain 800, there lie a plurality of access routers (corresponding to the above-mentioned plurality of access routers) 820, 822 and 824 located for a mobile node to be accessible to the global communication network 100. The present invention employs the access network domain 800 in which a given mobile node MN 850 roaming therein does not require a change of address, and no need exists for a change of address even if a large number of access routers subjected to switching lie in the access network domain 800. This is known in the relevant technical fields as the local mobility management.

A description will be given hereinbelow of a preferred method for achieving this. The access router 820 is composed of an access router AR 840 and a proxy mobile node (PMN; corresponding to the above-mentioned proxy node) 830, the access router 822 is composed of an access router AR 842 and a proxy mobile node 832, and the access router 824 is composed of an access router AR 844 and a proxy mobile node 834. Each of the ARs 840, 842 and 844 fulfills a function as an access router so as to gain access to a mobile node roaming within the access network domain 800. Each of the PMNs 830, 832 and 834 acts as a proxy for each mobile node and pertains to the corresponding access router 820, 822 or 824. When a mobile node, for example, the MN 850, first enters the access network domain 800, it configures a CoA on the basis of a prefix given by an access routed.

This CoA is captured by an access router, for example, the PMN 830 of the access router 820, and the MN 850 is connected thereto. With respect to the PMN 830, it is handled as a home address (which will hereinafter be preferred to as a "proxy home address" for avoiding confusion). The PMN 830 transmits a BU to a local HA 810 located within the access network domain 800, thereby binding this proxy home address to the address of the access router 820. The presence of the HA 810 and the binding are transparent to the MN 850 because of the operations by the PMN 830.

In a case in which the MN 850 moves to another access router, for example, to the access router 822, the PMN 832 of the access router 822 detects this connection therewith and takes over the proxy on this "proxy home address". The PMN 832 transmits a BU to the HA 810, thereby carrying out the processing to bind this "proxy home address" to the address of the access router 822. A packet transmitted to the CoA (for example, "proxy home address") of the MN 850 according to this method is delivered to a PMN of an access router to which the MN 850 pertains. The local mobility management is achievable in this way.

A person skilled in the art would recognize that many mobile nodes roaming within an access network domain and, at this time, a plurality of mobile nodes can be connected to a single access router. In this case, the PMNs 830, 832 and 834 manage a plurality of proxy home addressees. In the case of the employment of the conventional technique, the PMN is required to transmit a plurality of BUS, one for each proxy home address. Each BU actually contains the same "CoA", which is the address of an access router. In the present invention, the PMNs 830, 832 and 834 can transmit only one BU message indicating that a plurality of proxy home addresses are bound to a single address of the access router, which enables a considerable reduction in use of bandwidth. The above-described example shows another significant mode of the present invention. According to an embodiment of the present invention, the sender node of the BU message does not necessarily own any of the home addresses specified in the BU message. This is because the sender node of BU message registers information on one or a plurality of mobile nodes in the BU message for these mobile nodes and transmits it.

A person skilled in the art would appreciate that the nodes described above may be referred to using other terminologies. For instance, sometimes the AR 820 (and its PMN component 830) is referred to as a Mobility Access Gateway (MAG) and the local home agent 810 is referred to as a Local Mobility Anchor (LMA).

In another example related to the local mobility management scenario illustrated in FIG. 8, the use of the binding map option 450 permits access routers in the access network domain 800 to set routing rules at local HA 810. MN 850 may be a multi-interface mobile node. Thus, MN 850 can be connected simultaneously to a plurality of access routers. With simultaneous connection in the access network domain 800, it is highly possible for MN 850 to use multiple addresses (e.g. HoA) for communication. For example, MN 850 uses HoA1 via access router 820 for a file transfer session with a file server located in global communication network 100. Concurrently, MN 850 uses HoA2 via access router 822 for a voice session with another mobile node located in global communication network 100. Both HoA1 and HoA2 are stored as routing entries at local HA 810. Now, MN 850 wants to control how packets are routed to it within access network domain 800. For example, MN 850 is having a video conferencing session with another mobile node using HoA2. However, MN 850 is experiencing a significant delay for the video session. This could be due to the fact that access router 822 is currently serving too many mobile nodes and thus is delaying the routing of MN 850 packets. Therefore MN 850 wishes to offload most of its traffic via access router 822 to access router 820.

In such an event, MN 850 would prefer to have the video session transfer over to HoA1 Thus, MN 850 sends a bitmap value of "10", 10" to access router 820. An example of this bitmap is that MN 850 maps its HoAs to the identification of access routers that it has connection with in access network domain 800. Therefore, the first value of "10" implies that MN 850 wants traffic with destination address HoA1 to be routed via access router 820. Similarly, the second value of "10" implies that MN 850 wants traffic with destination address HoA2 to be routed via access router 820. With knowledge of such routing preferences for MN 850, access router 820 includes the bitmap defined by MN 850 in the binding map-option 450 of BU 400. Access router 820 forwards BU 400 to HA 810 which would allow HA 810 to use the routing rules defined when routing packets destined to MN 850.

The network-based local mobility management protocol example described above also provides an additional situation where a mobile node would have multiple home addresses. One situation is when network domain 800 in FIG. 8 is also the home network of the multiple-interfaced MN 850. Then, based on the previous description, MN 850 would obtain two addresses, one for each interface. When MN 850 roams out of the network domain 800, it can then send a BU message that binds its multiple home addresses to its care-of address(es) as described the main embodiment of the present invention. This is not restricted to multiple interfaced mobile node only. In some proposals of local mobility management, each mobile node is assigned an entire unique prefix. Thus, any mobile node can configure multiple home addresses from that unique prefix.

A person skilled in the art would recognize that the present invention is also applicable to a hierarchical mobility management. In the hierarchical mobility management, each mobile node can acquire a regional CoA from an entity known as a MAP (Mobility Anchor Point) . This regional CoA is a CoA to be bound to the home address in a BU message to be transmitted to a home agent. When the mobile node roams in the domain of the MAP, the regional CoA does not vary, but only a local CoA varies. There is a need for this local CoA to be bound to the regional CoA in a manner such that a BU message is transmitted to the MAP. For the present invention, a person skilled in the art would recognize that a mobile node is usable in a system in which a plurality of regional CoAs can be specified in a single BU message to be transmitted to MAP.

Although the present invention has been described by the embodiment which is conceivable to be the most practical and preferable, a person skilled in the art would recognize that all changes and modifications can be made in details of configuration and parameters without constituting departures from the scope of the invention.

Each functional block used in the explanations of embodiment of the present embodiment, described above, can be realized as a large scale integration (LSI) that is typically an integrated circuit. Each functional block can be individually formed into a single chip. Alternatively, some or all of the functional blocks can be included and formed into a single chip. Although referred to here as the LSI, depending on differences in integration, the integrated circuit can be referred to as the integrated circuit (IC), a system LSI, a super LSI, or an ultra LSI. The method of forming the integrated circuit is not limited to LSI and can be actualized by a dedicated circuit or a general-purpose processor. A field programmable gate array (FPGA) that can be programmed after LSI manufacturing or a reconfigurable processor of which connections and settings of the circuit cells within the LSI can be reconfigured can be used. Furthermore, if a technology for forming the integrated circuit that can replace LSI is introduced as a result of the advancement of semiconductor technology or a different derivative technology, the integration of the functional blocks can naturally be performed using the technology. For example, the application of biotechnology is a possibility.

### INDUSTRIAL APPLICABILITY

An address updating method, and a mobile node, a proxy node and a management node for use in this method can transmit a BU message while suppressing the wasteful use of the bandwidth even if a mobile node has a plurality of home addresses and a plurality of CoAs, and it is useful for a destination address updating method for a mobile node, and a mobile node, a proxy node and a management node for use in this method in a communication system which is designed to manage a home address allocated to a mobile node and a destination address of the mobile node associated with each other.

## Claims

1. An address updating method of updating an address of a destination of a mobile node (200) in a communication system including a plurality of mobile nodes (200, 720, 722, 724) and a management node (300, 710) configured to manage a home address allocated to each of the plurality of mobile nodes (200, 720, 722, 724) and an address of a destination of the mobile node (200) corresponding to the home address in a state associated with each other so that the management node (300, 710) updates the address of the destination of the mobile node (200), managed in the state associated, on the basis of a message notifying a changed address, the address having been changed due to movement of the mobile node (200), comprising:
a step (740-748, 750, 752) in which a predetermined mobile node (200) of the plurality of mobile nodes (200, 720, 722, 724) generates a single message, and transmits the generated message to the management node (300, 710);
**characterized by**
a step in which the management node (300, 710) updates the addresses of the destinations of the plurality of mobile nodes (200, 720, 722, 724), managed in said state associated, on the basis of the received message; and
wherein said message includes the home addresses allocated to the other mobile nodes (720, 722, 724) and the changed address .

2. The address updating method according to claim 1, further comprising a step (740) in which the predetermined mobile node (200) transmits, to the other mobile nodes (720, 722, 724), a message for acquiring the home addresses allocated to the other mobile nodes (720, 722, 724) and the changed address.

3. A mobile node for use in a communication system including a plurality of mobile nodes (200, 720, 722, 724) and a management node (300, 710) configured to manage a home address allocated to each of the plurality of mobile nodes (200, 720, 722, 724) and an address of a destination of the mobile node (200) corresponding to the home address in a state associated with each other so that the management node (300, 710) updates the address of the destination of the mobile node (200), managed in the state associated, on the basis of a message notifying a changed address , the address having been changed due to movement of the mobile node (200), comprising:
message generating means (235) for generating a single message; and
transmission means (210) for transmitting the generated message to the management node (300, 710);
**characterized by**
said message including the home addresses allocated to the other mobile nodes (720, 722, 724) other than this mobile node (200) and the changed address.

4. A management node for use in a communication system including a plurality of mobile nodes (200, 720, 722, 724) and the management node (300, 710) configured to manage a home address allocated to each of the plurality of mobile nodes (200, 720, 722, 724) and an address of a destination of the mobile node (200) corresponding to the home address in a state associated with each other so that the management node (300, 710) updates the address of the destination of the mobile node (200), managed in the state associated, on the basis of a message notifying a changed address , the address having been changed due to movement of the mobile node (200), comprising:
communication means (310) for receiving the message, and
processing means (330)
**characterized by**
said message being transmitted from a predetermined mobile node (200) of the plurality of mobile node (200, 720, 722, 724) and including the home addresses allocated to the other mobile nodes (720, 722, 724) and the changed address after change due to the movement; and
said processing means (330) being configured to update the addresses of the destinations of the plurality of mobile nodes (200, 720, 722, 724) managed in said state associated, on the basis of the received message.

5. The address updating method according to claim 1, wherein the communication system further includes a plurality of access routers to which proxy nodes operating as proxies for the mobile nodes pertain and which are used when the mobile nodes have access to an external network, and wherein the management node manages addresses of the access routers and the addresses of the mobile nodes connected to the access routers in a state associated with each other and updates the addresses of the mobile nodes connected to the access routers, managed in the state associated, on the basis of a message notifying the addresses of the mobile nodes connected to the access routers, the address updating method further comprising:
a step in which the proxy node generates a single message including the address of the mobile node connected to the access router to which the proxy node itself pertains and transmits the generated message to the management node; and
a step in which the management node updates the address of the mobile node connected to the access router and managed in said state associated, on the basis of the received message.

6. The address updating method according to claim 5, wherein the mobile node for which the proxy node generated a message including the address of said mobile node, moves within a local range in which a change of the address of the mobile node does not occur due to the movement.

## Patentansprüche

1. Adress-Aktualisierungsverfahren zum Aktualisieren einer Adresse eines Ziels eines mobilen Knotens (200) in einem Kommunikationssystem, das eine Vielzahl mobiler Knoten (200, 720, 722, 724) und einen Verwaltungs-Knoten (300, 710) enthält, der so konfiguriert ist, dass er eine jedem der Vielzahl mobiler Knoten (200, 720, 722, 724) zugewiesene Heimatadresse und eine Adresse eines Ziels des mobilen Knotens (200), die der Heimatadresse entspricht, in einem miteinander verknüpften Zustand so verwaltet, dass der Verwaltungs-Knoten (300, 710) die Adresse des Ziels des mobilen Knotens (200), die in dem verknüpften Zustand verwaltet wird, auf Basis einer Nachricht aktualisiert, die eine geänderte Adresse mitteilt, wobei die Adresse aufgrund von Bewegung des mobilen Knotens (200) geändert worden ist, und das Verfahren umfasst:
einen Schritt (740-748, 750, 752), in dem ein vorgegebener mobiler Knoten (200) der Vielzahl mobiler Knoten (200, 720, 722, 724) eine einzelne Nachricht erzeugt und die erzeugte Nachricht zu dem Verwaltungs-Knoten (300, 710) sendet;
**gekennzeichnet durch**
einen Schritt, in dem der Verwaltungs-Knoten (300, 710) die Adressen der Ziele der Vielzahl mobiler Knoten (200, 720, 722, 724), die in dem verbundenen Zustand verwaltet werden, auf Basis der empfangenen Nachricht aktualisiert; und
wobei die Nachricht die Heimatadressen, die den anderen mobilen Knoten (720, 722, 724) zugewiesen sind, und die geänderte Adresse enthält.

2. Adress-Aktualisierungsverfahren nach Anspruch 1, das des Weiteren einen Schritt (740) umfasst, in dem der vorgegebene mobile Knoten (200) eine Nachricht zum Erfassen der den anderen mobilen Knoten (720, 722, 724) zugewiesenen Heimatadressen und der geänderten Adresse zu dem anderen mobilen Knoten (720, 722, 724) sendet.

3. Mobiler Knoten zum Einsatz in einem Kommunikationssystem, das eine Vielzahl mobiler Knoten (200, 720, 722, 724) und einen Verwaltungs-Knoten (300, 710) enthält, der so konfiguriert ist, dass er eine jedem der Vielzahl mobiler Knoten (200, 720, 722, 724) zugewiesene Heimatadresse und eine Adresse eines Ziels des mobilen Knotens (200), die der Heimatadresse entspricht, in einem miteinander verknüpften Zustand so verwaltet, dass der Verwaltungs-Knoten (300, 710) die Adresse des Ziels des mobilen Knotens (200), die
in dem verknüpften Zustand verwaltet wird, auf Basis einer Nachricht aktualisiert, die eine geänderte Adresse mitteilt, wobei die Adresse aufgrund von Bewegung des mobilen Knotens (200) geändert worden ist und der mobile Knoten umfasst:
eine Nachrichten-Erzeugungseinrichtung (235) zum Erzeugen einer einzelnen Nachricht; und
eine Sendeeinrichtung (210) zum Senden der erzeugten Nachricht zu dem Verwaltungs-Knoten (300, 710);
**dadurch gekennzeichnet, dass**
die Nachricht die den anderen mobilen Knoten (720, 722, 724) mit Ausnahme dieses mobilen Knotens (200) zugewiesenen Heimatadressen und die geänderte Adresse enthält.

4. Verwaltungs-Knoten zum Einsatz in einem Kommunikationssystem, das eine Vielzahl mobiler Knoten (200, 720, 722, 724) und den Verwaltungs-Knoten (300, 710) enthält, der so konfiguriert ist, dass er eine jedem der Vielzahl mobiler Knoten (200, 720, 722, 724) zugewiesene Heimatadresse und eine Adresse eines Ziels des mobilen Knotens (200), die der Heimatadresse entspricht, in einem miteinander verknüpften Zustand so verwaltet, dass der Verwaltungs-Knoten (300, 710) die Adresse des Ziels des mobilen Knotens (200), die in dem verknüpften Zustand verwaltet wird, auf Basis einer Nachricht aktualisiert, die eine geänderte Adresse mitteilt, wobei die Adresse aufgrund von Bewegung des mobilen Knotens (200) geändert worden ist und der Verwaltungs-Knoten umfasst:
eine Kommunikationseinrichtung (310) zum Empfangen der Nachricht, und
eine Verarbeitungseinrichtung (330),
**dadurch gekennzeichnet, dass**
die Nachricht von einem vorgegebenen mobilen Knoten (200) der Vielzahl mobiler Knoten (200 720, 722, 724) gesendet wird und die den anderen mobilen Knoten (720, 722, 724) zugewiesenen Heimatadressen sowie die geänderte Adresse nach Änderung aufgrund der Bewegung enthält; und
die Verarbeitungseinrichtung (330) so konfiguriert ist, dass sie die Adressen der Ziele der Vielzahl mobiler Knoten (200, 720, 722, 724), die in dem verbundenen Zustand verwaltet werden, auf Basis der empfangenen Nachricht aktualisiert.

5. Adress-Aktualisierungsverfahren nach Anspruch 1, wobei das Kommunikationssystem des Weiteren eine Vielzahl von Zugangs-Routern enthält, zu denen Proxy-Knoten gehören, die als Proxy-Einrichtungen für die mobilen Knoten arbeiten und die eingesetzt werden, wenn die mobilen Knoten Zugang zu einem externen Netzwerk haben, und wobei der Verwaltungs-Knoten Adressen der Zugangs-Router und die Adressen der mit dem Zugangs-Routern verbundenen mobilen Knoten in einem miteinander verknüpften Zustand verwaltet und die Adressen der mit dem Zugangs-Routern verbundenen mobilen Knoten, die in dem verknüpften Zustand verwaltet werden, auf Basis einer Nachricht aktualisiert, die die Adressen der mit dem Zugangs-Routern verbundenen mobilen Knoten mitteilt, wobei das Adress-Aktualisierungsverfahren des Weiteren umfasst:
einen Schritt, in dem der Proxy-Knoten eine einzelne Nachricht erzeugt, die die Adresse des mobilen Knotens enthält, der mit dem Zugangs-Router verbunden ist, zu dem der Proxy-Knoten selbst gehört, und die erzeugte Nachricht zu dem Verwaltungs-Knoten sendet; und
einen Schritt, in dem der Verwaltungs-Knoten die Adresse des mit dem Zugangs-Router verbundenen mobilen Knotens, die in dem verknüpften Zustand verwaltet wird, auf Basis der empfangenen Nachricht aktualisiert.

6. Adress-Aktualisierungsverfahren nach Anspruch 5, wobei der mobile Knoten, für den der Proxy-Knoten eine Nachricht erzeugt hat, die die Adresse des mobilen Knotens enthält, sich innerhalb eines lokalen Bereiches bewegt, in dem eine Änderung der Adresse des mobilen Knotens aufgrund der Bewegung nicht auftritt.

## Revendications

1. Procédé de mise à jour d'adresse pour mettre à jour une adresse d'une destination d'un noeud mobile (200) dans un système de communication, comprenant une pluralité de noeuds mobiles (200, 720, 722, 724) et un noeud de gestion (300, 710) configuré pour gérer une adresse d'origine attribuée à chaque noeud mobile de la pluralité (200, 720, 722, 724) et une adresse d'une destination du noeud mobile (200) correspondant à l'adresse d'origine dans un état où elles sont associées entre elles, de telle sorte que le noeud de gestion (300, 710) met à jour l'adresse de la destination du noeud mobile (200), gérée dans l'état associé, sur base d'un message notifiant une adresse modifiée, l'adresse ayant été modifiée à cause du déplacement du noeud mobile (200), comprenant :
une étape (740-748, 750, 752) dans laquelle un noeud mobile prédéterminé (200) de la pluralité de noeuds mobiles (200, 720, 722, 724) génère un message unique et transmet le message généré au noeud de gestion (300, 710) ;
**caractérisé par**
une étape dans laquelle le noeud de gestion (300, 710) met à jour les adresses des destinations de la pluralité de noeuds mobiles (200, 720, 722, 724), gérées dans ledit état associé, sur base du message reçu ; et
dans lequel ledit message inclut les adresses d'origine attribuées aux autres noeuds mobiles (720, 722, 724) ainsi que l'adresse modifiée.

2. Procédé de mise à jour d'adresse selon la revendication 1, comprenant en outre une étape (740) dans laquelle le noeud mobile prédéterminé (200) transmet aux autres noeuds mobiles (720, 722, 724) un message pour acquérir les adresses d'origine attribuées aux autres noeuds mobiles (720, 722, 724) ainsi que l'adresse modifiée.

3. Noeud mobile destiné à être utilisé dans un système de communication comprenant une pluralité de noeuds mobiles (200, 720, 722, 724) et un noeud de gestion (300, 710) configuré pour gérer une adresse d'origine attribuée à chaque noeud mobile de la pluralité (200, 720, 722, 724) et une adresse d'une destination du noeud mobile (200) correspondant à l'adresse d'origine dans un état où elles sont associées entre elles, de telle sorte que le noeud de gestion (300, 710) met à jour l'adresse de la destination du noeud mobile (200) gérée dans l'état associé, sur base d'un message notifiant une adresse modifiée, l'adresse ayant été modifiée à cause d'un déplacement du noeud mobile (200), comprenant :
un moyen de génération de message (235) pour générer un seul message ; et
un moyen de transmission (210) pour transmettre le message généré au noeud de gestion (300, 710) ;
**caractérisé par**
le' fait que ledit message comprend les adresses d'origine attribuées aux autres noeuds mobiles (720, 722, 724) autres que ce noeud mobile (200) ainsi que l'adresse modifiée.

4. Noeud de gestion destiné à être utilisé dans un système de communication comprenant une pluralité de noeuds mobiles (200, 720, 722, 724) et un noeud de gestion (300, 710) configuré pour gérer une adresse d'origine attribuée à chaque noeud mobile de la pluralité (200, 720, 722, 724) et une adresse d'une destination du noeud mobile (200) correspondant à l'adresse d'origine dans un état où elles sont associées entre elles, de telle sorte que le noeud de gestion (300, 710) met à jour l'adresse de la destination du noeud mobile (200) gérée dans l'état associé, sur base d'un message notifiant une adresse modifiée, l'adresse ayant été modifiée à cause d'un déplacement du noeud mobile (200), comprenant :
un moyen de communication (310) pour recevoir le message, et
un moyen de traitement (330),
**caractérisé par**
**le fait que** ledit message est transmis à partir d'un noeud mobile prédéterminé (200) de la pluralité de noeuds mobiles (200, 720, 722, 724) et comprend les adresses d'origine attribuées aux autres noeuds mobiles (720, 722, 724) et l'adresse modifiée après modification due au déplacement ;
et
**le fait que** ledit moyen de traitement (330) est configuré pour mettre à jour les adresses des destinations de la pluralité de noeuds mobiles (200, 720, 722, 724) gérées dans ledit état associé sur base du message reçu.

5. Procédé de mise à jour d'adresse selon la revendication 1, dans lequel le système de communication comprend en outre une pluralité de routeurs d'accès à laquelle appartiennent des noeuds mandataires opérant comme relais pour les noeuds mobiles et qui sont utilisés lorsque les noeuds mobiles ont accès à un réseau externe, dans lequel le noeud de gestion gère des adresses des routeurs d'accès et les adresses des noeuds mobiles connectés aux routeurs d'accès dans un état où elles sont associées entre elles, et met à jour les adresses des noeuds mobiles connectés aux routeurs d'accès gérées dans l'état associé, sur base d'un message notifiant les adresses des noeuds mobiles connectés au routeurs d'accès, le procédé de mise à jour d'adresse comprenant en outre :
une étape dans laquelle le noeud mandataire génère un message unique comprenant l'adresse du noeud mobile connecté au routeur d'accès auquel le noeud mandataire lui-même appartient et transmet le message généré au noeud de gestion ; et
une étape dans laquelle le noeud de gestion met à jour l'adresse du noeud mobile connecté au routeur d'accès gérée dans ledit état associé sur base du message reçu.

6. Procédé de mise à jour d'adresse selon la revendication 5, dans lequel le noeud mobile pour lequel le noeud mandataire a généré un message comprenant l'adresse dudit noeud mobile se déplace dans une zone locale dans laquelle une modification de l'adresse du noeud mobile ne se produit pas lors du déplacement.
